# EUROPEAN PATENT APPLICATION

(11) **EP 4 596 416 A1**
(43) Date of publication of application: **06.08.2025**
(21) Application number: 25154254.4
(22) Date of filing: 27.01.2025
(51) Int. Cl.: B64D 27/34

(54) **ADSORPTION BASED AIRCRAFT COOLANT SYSTEM**

(30) Priority: 31.01.2024 US 202418428213
(71) Applicant: Hamilton Sundstrand Corporation, Charlotte, NC 28217-4578 (US)
(72) Inventor: KILCHYK, Viktor, Lancaster, NY, 14086 (US); BARTOSZ, Lance R., Granby, MA, 01033 (US)
(74) Representative: Dehns

(57) **Abstract**

An aircraft includes an electrical system (30) having at least one cooled electrical component (40). The at least one cooled electrical component is a low grade heat source. The aircraft further includes a cooling system with a coolant loop (100) passing through the at least one cooled electrical component and through a first adsorption cooler (50). The first adsorption cooler is configured to cool coolant in the cooling loop using an adsorption process.

## Description

### BACKGROUND

Exemplary embodiments of the present disclosure pertain to the art of aircraft cooling systems, and more particularly to an adsorption based cooling system for an aircraft.

Conventional turbine driven aircraft utilize turbine engines to provide thrust, and to generate electrical power for onboard systems. The gas turbine engine configurations rapidly generate extremely large amounts of heat and are referred to as high grade heat loads. The gas turbine engine is continuously operated at the high temperature levels. As a result, cooling systems for the turbine engines are configured to dissipate large magnitudes of heat while simultaneously operating at the heat levels of a high grade heat load. Aircraft cooling systems are typically designed to efficiently dissipate large heat loads, while also operating at extremely high temperatures.

As aircraft design has shifted toward providing some, or all, of the operational power from alternative sources, such as onboard electrical energy sources, the traditional heat loads within an aircraft system have likewise shifted away from the high grade heat loads generated within a gas powered turbine and now include low grade heat loads generated from alternative power sources such as electrical energy storge systems.

### BRIEF DESCRIPTION

Disclosed is an aircraft that includes an electrical system having at least one cooled electrical component. The at least one cooled electrical component is a low grade heat source. The aircraft further includes a cooling system with a coolant loop passing through the at least one cooled electrical component and through a first adsorption cooler. The first adsorption cooler is configured to cool coolant in the cooling loop using an adsorption process.

In addition to one or more of the features described above, or as an alternative to any of the foregoing embodiments, the at least one cooled electrical component includes a fuel cell stack.

In addition to one or more of the features described above, or as an alternative to any of the foregoing embodiments, the at least one cooled electrical component includes at least one of an environmental control component, an electrical component and a hydraulic component.

In addition to one or more of the features described above, or as an alternative to any of the foregoing embodiments, the aircraft is an all electric aircraft.

In addition to one or more of the features described above, or as an alternative to any of the foregoing embodiments, the coolant in the cooling loop is one of water and a water-based solution.

In addition to one or more of the features described above, or as an alternative to any of the foregoing embodiments, the cooling system includes at least a second adsorption cooler, parallel to the first adsorption cooler.

In addition to one or more of the features described above, or as an alternative to any of the foregoing embodiments, an operational phase of the first adsorption cooler, and an operational phase of the second adsorption cooler are controlled via a controller, and wherein the controller is configured such that at least one adsorption cooler is in an adsorption phase at all times during operation of the aircraft.

In addition to one or more of the features described above, or as an alternative to any of the foregoing embodiments, the adsorption cooler is connected to a waste heat rejection system, and wherein the waste heat rejection system is configured to reject heat to at least one of vent air, ram air, and aircraft fuel.

In addition to one or more of the features described above, or as an alternative to any of the foregoing embodiments, the aircraft further includes a coolant pump connected to the coolant loop and configured to drive coolant through the coolant loop.

In addition to one or more of the features described above, or as an alternative to any of the foregoing embodiments, coolant is gravity fed through the coolant loop.

In addition to one or more of the features described above, or as an alternative to any of the foregoing embodiments, the aircraft is a more electric aircraft.

Also disclosed is a method of cooling an electrical component in an aircraft includes generating a low grade heat source via the electrical component, passing a coolant through the electrical component using a coolant loop, thereby transferring heat from the electrical component to the coolant loop, providing the coolant to an adsorption cooler, and moving the heat from the coolant loop to a waste heat system using an adsorption process.

In addition to one or more of the features described above, or as an alternative to any of the foregoing embodiments, the adsorption process is a four phase process including a pre-heating phase, a desorption phase, a pre-cooling phase and an adsorption phase.

In addition to one or more of the features described above, or as an alternative to any of the foregoing embodiments, the moving the heat from the coolant loop to the waste heat system using the adsorption process comprises using at least two adsorption coolers.

In addition to one or more of the features described above, or as an alternative to any of the foregoing embodiments, the method further includes controlling the at least two adsorption coolers such that at least one of the at least two adsorption coolers in the adsorption phase throughout the operation of the method.

In addition to one or more of the features described above, or as an alternative to any of the foregoing embodiments, the waste heat system is at least one of a vent air system, a ram air system, and a fuel system.

In addition to one or more of the features described above, or as an alternative to any of the foregoing embodiments, the coolant is one of water and a water-based solution.

In addition to one or more of the features described above, or as an alternative to any of the foregoing embodiments, the coolant is driven via a coolant pump.

In addition to one or more of the features described above, or as an alternative to any of the foregoing embodiments, the coolant is gravity fed.

In addition to one or more of the features described above, or as an alternative to any of the foregoing embodiments, The aircraft is an all electric aircraft.

### BRIEF DESCRIPTION OF THE DRAWINGS

The following descriptions should not be considered limiting in any way. With reference to the accompanying drawings, like elements are numbered alike:
FIG. 1 is a schematic view of an electric aircraft including an adsorption based cooler;
FIG. 2 is a schematic adsorption cooling loop for the electric aircraft of FIG. 1 according to one example; and
FIG. 3 is a schematic adsorption cooling loop for the electric aircraft of FIG. 1 according to another example.

### DETAILED DESCRIPTION

A detailed description of one or more embodiments of the disclosed apparatus and method are presented herein by way of exemplification and not limitation with reference to the Figures.

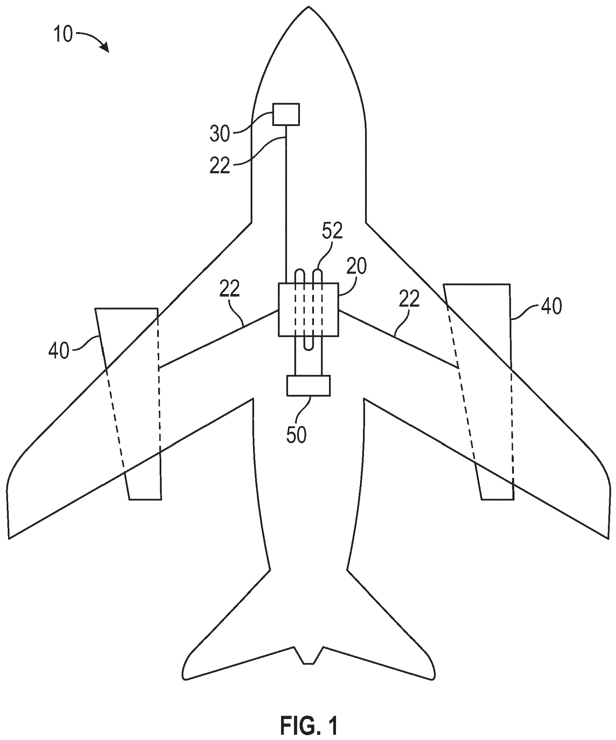

FIG. 1 schematically illustrates an aircraft 10. The example aircraft 10 is an all-electric aircraft, where power for all systems, including thrust generation systems, is provided by onboard electrical energy sources. The example aircraft 10 includes a fuel cell based electric energy source 20. The electric energy source 20 provides operational energy to onboard electrical systems 30 and each of multiple thrust producing components 40 via power distribution connections 22. All thrust in the example aircraft 10 is provided by the thrust producing components 40, which are driven by electrical energy rather than conventional gas turbine engine systems. In alternative examples, similar aircraft to those described herein can include aircraft where a portion of the thrust is derived from electric energy (e.g., more electric aircraft) and/or aircraft where one or more electrical systems 30 are powered by a fuel cell 20, or other electrical energy source that generates a low grade heat load, instead of energy provided using a generator, with main thrust being provided by gas turbine engines.

During operation, the fuel cell 20 is a low grade heat source. As used herein, a low grade heat source is a heat source that continuously generates heat and is typically operated at a relatively low maximum temperature either due to efficiency requirements or structural limitations. By way of example, a typical fuel cell operating temperature is in the range of 300 degrees F (148.9 C) and continuously generates heat as the fuel cell 20 generates power. If uncooled, the heat production will exceed the system temperature limits, resulting in undesirable operations of the fuel cell 20. By way of contrast, gas turbine engine turbine inlets operate at temperatures in the range of 1500 to 3000 degrees F (815.5 C to 1648.9 C) in some examples.

To accommodate the continuous heat generation, and the lower operating temperature range, the fuel cell 20 uses continuous cooling via an adsorption cooling system 50. The adsorption cooling system 50 (cooling system 50) passes a cooling fluid (alternately referred to as a coolant), such as water, through the fuel cell 20 via a coolant loop 52. While passing through the fuel cell 20, the cooling fluid is heated via a conduction process and returns to the cooling system 50. While in the cooling system 50, the heat is transferred from the cooling fluid to a sorbent solid and dissipated from the sorbent solid in an adsorption process.

Adsorption is a process in which atoms, ions or molecules from a substance (e.g., gas, liquid or a dissolved solid) adheres to a surface of an adsorbent. In contrast, absorption is a process in which a fluid is dissolved by a liquid or a solid (absorbent). Adsorption is a surface-based process where a film of adsorbate is created on the surface while absorption involves the entire volume of the absorbing substance.

In adsorption cooling, such as the cooling system 50, an adsorber adsorbs refrigerant vapor into a solid (referred to as a sorbent). The refrigerant vapors are then desorbed from the sorbent in a generation process, and the generation process dissipates heat energy. Adsorption cooling vapors can include water, methanol, or other fluids, and no CFC's (chlorofluorocarbon's) or ammonia are utilized within the adsorbent cooling system 50. As no CFC's or ammonia are utilized, there is no risk of CFC's or ammonia escaping into the environment, and the adsorption cooling system 50 is substantially more environmentally friendly than absorption based cooling systems which do utilize CFC's and ammonia.

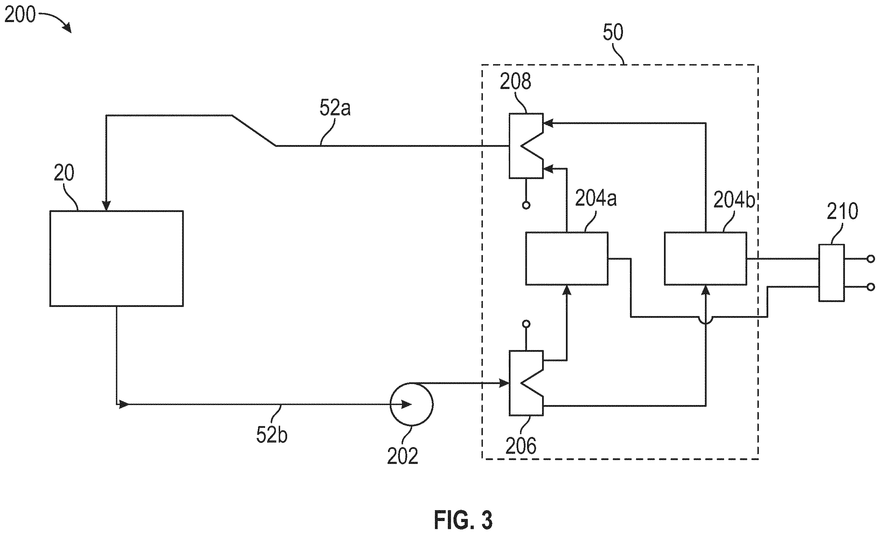

During a typical adsorption cooling process, the cooling system 50 operates in cycles, switching between an adsorbent operation pulling heat from the coolant and a desorption operation dissipating heat into a waste heat system. If constant adsorption of heat is required, the cooling system 50 can be configured with multiple parallel adsorption coolers 50 (see, for example, FIG. 3). In such an example, the adsorption coolers 50 can be controlled such that at least one cooler 50 is always operating in the adsorbent portion of the cycle, and thus heat is always being removed. In some examples, the waste heat is rejected into vent air, ram air, fuel, and/or any combination thereof. In such a system, the cooling is provided in two ways. First, the adsorption moves heat from the heat source (fuel cell 20) to the adsorption cooling system 50. This provides some cooling to the fuel cell 20. Second, the primary adsorption cooling affect is provided through the adsorption-desorption process. The adsorption cooling effect may also be used to provide cooling at different temperature levels for aircraft environmental control system (air conditioning), electronics, electrical, hydraulics systems along with providing auxiliary/secondary cooling of the fuel cell 20 (e.g. some hot regions in the fuel cell 20).

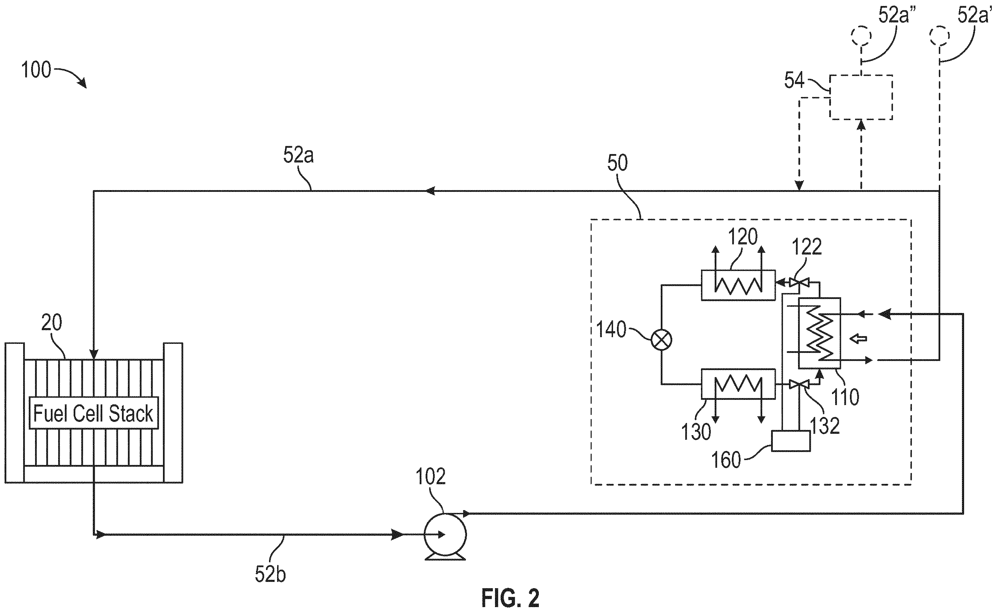

With continued reference to FIG. 1, FIG. 2 schematically illustrates a adsorption cooling loop 100 in more detail. The adsorption cooling loop 100 provides a fluid coolant loop 52a, 52b through the fuel cell 20. Fluid in the adsorption cooling loop 52a, 52b is driven by a coolant pump 102. Similar configurations can be utilized for alternative low grade heat sources on the aircraft 10 (see FIG. 1) according to the same principles and substituting the alternative low grade heat source for the fuel cells 20 of FIG. 2. Additionally, in some examples, the coolant can be driven by gravity (alternately referred to as being gravity fed) and the coolant pump 102 can be omitted.

Within the adsorption cooling system 50 is an adsorber 110, a condenser 120 and an evaporator 130. The adsorber 110 is fluidly connected to the condenser 120 via a first connection 122 and is fluidly connected to the evaporator 130 via a second connection 132. The condenser 120 is fluidly connected to the evaporator 130 via an evaporator 140. In some examples, the first connection 122 and the second connection 132 are valves controlled via a controller 160. The controller 160 may be a cooling system specific controller, a general aircraft controller, a module or program within another controller on the aircraft, or any similar configuration.

During operation, in a general example, the adsorption cooler 50 produces a cooling effect by subjecting an adsorbent bed within the adsorber 110 to four sequential processes. The processes are pre-heating, desorption, pre-cooling and adsorption. In this example cycle, the adsorption cooler 110 operates between two constant pressures, a condenser pressure (the pressure in the condenser 120) and an evaporator pressure (the pressure in the evaporator 130).

During the pre-heating process the adsorbent bed within the adsorber 110 is operated as a closed system and is heated to raise the temperature of the adsorbent bed. The temperature increase induces a vapor pressure inside the adsorber 110. During this phase, the total amount of adsorbed refrigerant remains constant. In one example, the total amount of refrigerant is at a maximum concentration during the preheating phase.

Once the vapor pressure reaches a desired threshold, the adsorption cooler 50 switches to the desorption process, where the adsorbent bed continues heating, and the first and second connections 122, 132 to the condenser 120 and the evaporator 130 are opened. Heat continues to be applied, and the temperature of the adsorber 110 continues to rise. The continued temperature increase induces a portion of the refrigerant which is adsorbed onto the solid surface of the sorbent to be desorbed from the solid surface of the sorbent in a vapor phase. This is referred to as desorption. The desorbed vapor flows into the condenser 120 through the opened connection 122 and is condensed. The vapor pressure in the adsorber 110 is equal to the condenser 120 pressure during this phase. In one example, the desorption phase ends when the adsorbed amount falls to a minimum adsorption threshold.

Once the minimum adsorption threshold has been reached, the precooling phase is started, and the connection between the adsorber 110 and the condenser 120 and evaporator 130 are closed such that no vapor or fluid is communicated between the adsorber 110 and the condenser 120 or evaporator 130. The temperature of the adsorber 110 is decreased, causing the pressure in the adsorber 110 to be reduced to the same pressure level as the evaporator 130.

Once the pressure of the bed in the adsorber 110 is equal to the pressure in the evaporator 130, the connection between the adsorber 110 and the evaporator 130 is opened, and the adsorber 110 is continuously subjected to cooling. The cooling incudes the vapor being adsorbed onto the surface of the adsorbent. Once the total amount of refrigerant adsorbed is raised to the maximum concentration, the cycle returns to the pre-heating process and the cycle re-iterates.

In one optional embodiment, the utilization of environmentally friendly refrigerants, such as water, can allow the cooling line 52a, 52b to be open loop, with the source of the coolant in the cooling loop not being recirculated coolant from the adsorption cooler 50, but being driven from another source, such as an onboard condenser. In such an example, spent coolant existing the adsorption cooling system 50 can be fully exhausted into the environment via a coolant line 52a' (illustrated in dashed, as optional) or partially recovered via a condenser 54 through a coolant line 52a" (illustrated in dashed lines as being optional). These optional embodiments are permissible due to the inert nature of the coolant flowing through the coolant line 52a, 52b.

With continued reference to FIGS. 1 and 2, FIG. 3 illustrates an alternate example adsorption cooling loop 200 including a coolant line 52a connecting an adsorption cooler 50 to the fuel cells 20, and a coolant line 52b connecting the fuel cells 20 to the adsorption cooler 50. Coolant fluid is driven through the coolant lines 52a, 52b using a coolant pump 202, or any similar means of driving fluid. In one example, due to the expected orientation within an aircraft, coolant is driven through the fluid lines 52a, 52b via gravity, and no motive force is required.

Within the adsorption cooler 50 are two parallel systems 204a, 204b with each parallel system 204a, 204b being substantially identical. Fluid is provided from the coolant line 52b to the parallel systems 204a, 204b through a switchable valve 206, and from the parallel systems 204a, 204b to the coolant line 52a via another switchable valve 208. The operational phases within the parallel systems 204a, 204b are controlled via a controller 210. The controller 210 also controls the switching of the valves 206, 208. During operation, the parallel systems 204a, 204b can be controlled such that heat is always being adsorbed by one of the parallel systems 204a, 204b. Alternatively, the systems 240a, 204b may be controlled such that one of the parallel systems 204a, 204b provides a redundancy failure mode to allow for continued cooling of the fuel cell 20 in the event of a fault in a primary of the parallel systems 204a, 204b.

With general reference to all of FIGS. 1-3, In one example, the adsorption cooling system is operated using approximately 1 kW input power for the circulation pump and controller and can have a lifecycle up to approximately 30 years with minimal maintenance. In yet another example, the adsorption cooler incorporates additional energy sources, such as solar heated hot water, for use within cogeneration systems.

While described above with reference generally to an all electric aircraft, it is appreciated that the adsorption cooling systems described herein can likewise be used with more electric aircraft, hybrid electric aircraft, or any other aircraft including electrical systems requiring low grade heat dissipation. In yet another embodiment, the adsorption cooling can be implemented to cool onboard electrical systems in a gas turbine engine driven aircraft, when the cooled electrical systems are isolated from the interior portions of the gas turbine engine.

Furthermore, while described above with general reference to cooling a heat cell, it is appreciated that the adsorption cooling systems may beneficially provide cooling for other similar aircraft systems including, environmental control systems, electrical systems, hydraulic system, and the like. Additionally, the heating and cooling provided by the adsorption coolant systems can provide environmental heating and cooling to an aircraft cabin.

In yet another implementation, the coolant lines 52, 52a, 52b can be provided through specific targeted locations of a fuel cell, or other low grade load, thereby providing targeted cooling to hot spots within the fuel cell, or other low grade load.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft comprising:
an electrical system (30) including at least one cooled electrical component (40), wherein the at least one cooled electrical component is a low grade heat source (20); and
a cooling system including a coolant loop (100) passing through the at least one cooled electrical component and through a first adsorption cooler (50), wherein the first adsorption cooler is configured to cool coolant in the cooling loop using an adsorption process.

2. The aircraft of claim 1, wherein the at least one cooled electrical component (40) includes a fuel cell stack (20).

3. The aircraft of claim 1 or 2, wherein the at least one cooled electrical component (40) includes at least one of an environmental control component, an electrical component and a hydraulic component.

4. The aircraft of claim 1, 2 or 3, wherein the aircraft is an all electric aircraft.

5. The aircraft of any preceding claim, wherein the coolant in the cooling loop (100) is one of water and a water-based solution.

6. The aircraft of any preceding claim, wherein the cooling system includes at least a second adsorption cooler, parallel to the first adsorption cooler; and optionally wherein an operational phase of the first adsorption cooler (50), and an operational phase of the second adsorption cooler are controlled via a controller (210), and wherein the controller is configured such that at least one adsorption cooler is in an adsorption phase at all times during operation of the aircraft.

7. The aircraft of any preceding claim, wherein the adsorption cooler (50) is connected to a waste heat rejection system, and wherein the waste heat rejection system is configured to reject heat to at least one of vent air, ram air, and aircraft fuel.

8. The aircraft of any preceding claim, further comprising a coolant pump (102) connected to the coolant loop (100) and configured to drive coolant through the coolant loop.

9. The aircraft of any preceding claim, wherein coolant is gravity fed through the coolant loop (100); and/or wherein the aircraft is a more electric aircraft.

10. A method of cooling an electrical component in an aircraft comprising:
generating a low grade heat source via the electrical component;
passing a coolant through the electrical component using a coolant loop, thereby transferring heat from the electrical component to the coolant loop;
providing the coolant to an adsorption cooler; and
moving the heat from the coolant loop to a waste heat system using an adsorption process.

11. The method of claim 10, wherein the adsorption process is a four phase process including a pre-heating phase, a desorption phase, a pre-cooling phase and an adsorption phase.

12. The method of claim 10 or 11, wherein the moving the heat from the coolant loop to the waste heat system using the adsorption process comprises using at least two adsorption coolers; and optionally further comprising controlling the at least two adsorption coolers such that at least one of the at least two adsorption coolers in the adsorption phase throughout the operation of the method.

13. The method of claim 10, 11 or 12, wherein the waste heat system is at least one of a vent air system, a ram air system, and a fuel system.

14. The method of any of claims 10 to 13, wherein the coolant is one of water and a water-based solution; and/or wherein the coolant is driven via a coolant pump.

15. The method of any of claims 10 to 14, wherein the coolant is gravity fed; and/or wherein the aircraft is an all electric aircraft.
